# EUROPEAN PATENT APPLICATION

(11) **EP 4 818 910 A1**
(43) Date of publication of application: **07.10.2026**
(21) Application number: 25462003.2
(22) Date of filing: 02.04.2025
(51) Int. Cl.: G06F 11/3668, G01M 17/06, G06F 11/3698, G05D 1/00

(54) **AUTOMATED ADAS TESTING IN AR ENVIRONMENT**

(71) Applicant: Budapesti Müszaki és Gazdaságtudományi Egyetem, 1111 Budapest (HU)
(72) Inventor: Rövid, András, 2310 Szigetszentmiklós (HU); Vincze, Zsolt, 2094 Nagykovácsi (HU); Szalay, Zsolt, 1111 Budapest (HU); Cserni, Márton, 1107 Budapest (HU); Nagy, Szabolcs, 1211 Budapest (HU); Szalai, Mátyás, 1172 Budapest (HU); Csonthó, Mihály, 1053 Budapest (HU); Boronyák, Ádám, 8981 Gellénháza (HU)

(57) **Abstract**

The system enables automatic, highly reproducible execution of one or more test scenarios (with different test settings), controlled by a central system with a unique architecture cooperating with a distributed sensor network (consisting of camera, lidar and other sensor sensors). The central system receives higher-level data synchronized in time from the sensors and the vehicles/platforms participating in the tests, on the basis of which it generates a digital representation of the area covered by the sensors (the so-called digital twin model) in real time. The digital twin model contains the vehicle/platfonn states needed for control, while the reference trajectories are provided in the scenario monitoring component.

## Description

The invention CN113515463A entitled "Automatic testing method and device, computer equipment and storage medium" deals with the problem of automated simulation test by "establishment of mathematical models of realistic static environment and dynamic traffic scenes through computer simulation technology, so that autonomous vehicles and algorithms can conduct driving tests in virtual traffic scenes. Therefore, how to conduct diverse and effective simulation tests on automated driving systems is a problem that needs to be considered and resolved in the current automated driving simulation."

In contrast the proposed invention aims to solve the problem of automated testing of ADAS functions in real test environments and real vehicles/platforms where the control of scenarios, vehicles/platforms is realized in real-time by the central computer. On top of that, the invention The system provides the ability to include virtual vehicles in testing, to which the real test vehicles respond as they would to real targets, by injecting the object information through a designated interface directly into the object list managed by the vehicle.

The invention CN109614704A entitled ADAS automatic test system and method relates to an ADAS automatic test system and method, an ADAS system and test management software are managed by an automatic test management unit in a unified manner, and simulation scene software and the ADAS system are connected through a hardware board card and comprise CarMaker software and a Simulink model. Virtual sensor and virtual scene, related data is sent to the Simulink model; the Simulink model directly sends related data to the ADAS system through a hardware board card, an ADAS automatic test management unit is added to the Simulink model to achieve unified management of test scenes and test dynamics software, and connection, real-time interaction and convenient operation are achieved through the Simulink software.

In contrast the proposed invention works with real sensory data and at the same time the digital twin representation of the testing environment is generated in real-time and the whole test run is controlled by management software running on a central computer. In addition our invention provides the ability to perform tests in augmented reality scenarios, where the real test vehicles react to virtual objects in the same way they would to real objects.

The invention US10379007B2 entitled "Automated robotic test system for automated driving systems" An integrated automated robotic test system for automated driving systems is disclosed, which is operable to provide an automated testing system for coordinated robotic control of automobiles equipped with automation functions (i.e., test vehicles) and unmanned target robots with which test vehicles may safely collide. The system may include a system for controlling a vehicle that includes a brake actuator, a throttle actuator, and a steering actuator. The brake actuator is controlled by a brake motor and configured to press and release a brake pedal of the vehicle. The throttle actuator is controlled by a throttle motor and configured to press and release a gas pedal of the vehicle. The steering actuator is configured to control a steering wheel of the vehicle. The steering actuator includes a steering motor configured to attach to the steering wheel and a reaction stand configured to support the steering motor.

In contrast our invention does not focuses on the problem of how to actuate the test vehicles/platforms with an actuation kit and how this kit is designed, rather it solves the problem of automated testing, where the state of test vehicles/platforms is available in the digital twin model of the testing environment (including all static as well as all dynamic objects) which is updated in real-time based on camera/lidar sensory data deployed in the infrastructure (testing environment). In addition, the testing scenarios may include both virtual and physical targets simultaneously, to which the test vehicles react in the same way, without knowing which object is real and which is virtual. The control of test vehicles is first of all carried out through designated interfaces to their actuation systems (steering, braking, acceleration). The invention US10379007B2 can be considered as a complementary solution to our proposed system of automated ADAS testing.

### Description of the invention Automated ADAS testing in AR environment

The subject of the invention is a system for the automatic testing of advanced driver assistance system functions in vehicles, with which test series can be carried out without human intervention. The invention is intended for use in all designated vehicle testing locations where advanced driver assistance functions are tested.

Currently, driver assistance functions are tested using manually driven test vehicles on automotive test tracks suitable for such evaluations. A key aspect of these tests is their reproducibility, which can only be partially achieved with human-driven vehicles. This is because a human driver cannot precisely follow the same trajectory and speed profile multiple times in succession. Deviations from the reference trajectory can often be significant, and, importantly, as the number of consecutive tests increases, the driver's concentration and attention tend to decline. This deterioration further affects the quality of test execution, and after a certain point, effective testing can only continue after a rest period.

Additionally, vehicle tests that involve higher risks, such as high-speed or collision-prone scenarios, require special attention and significant time investment.

The purpose of the invention is to eliminate the limitations - which are connected to the implementation of advanced driving assistance function tests - highlighted above and also to significantly increase the number of vehicle tests by removing the driver from the testing loop and introducing a central monitoring and control system instead.

The solution stated in the invention enables the automatic, highly accurate (with different testing settings) reproducible execution of one or more test scenarios, which is controlled by a central system with a unique architecture cooperating with a distributed sensor network (consisting of cameras, lidar and other detection sensors) (1).

The central system receives time-synchronized high-level data from the sensors (including the spatial position, orientation, and object class of dynamic objects within the area covered by the sensor network) and from the vehicles/platforms participating in the tests (provided they are equipped with sensors that generate data contributing to the quality of the digital twin, such as a GNSS system). Based on this data, the system generates a real-time digital representation of the area covered by the sensors, known as the digital twin model. The invention can also be used in cases where the vehicles/platforms participating in the tests do not have built in localization device (e.g. GNSS system, various encoder-based solutions). The higher-level object data (spatial position, orientation, object class) obtained from each sensor are linked based on the time stamps assigned to them. If a given physical object is detected by multiple sensors, the higher-level data belonging to it are fused taking into account the measurement uncertainty. The estimation of the future state of the objects is realized through their model-based tracking. Thanks to this, the temporal state of the digital twin model *t*0+Δ*t* can be estimated. Here *t*0 is the time of generation of the data generated by the sensors, and Δ*t* is the sum of the delays measured during data processing (including delays associated with communication and data processing).

The resulting twin model contains the estimated state of the objects (test vehicles, platforms) participating in the test scenario, as well as a UHD map describing the static elements of the environment, based on which the participants in the test scenario are controlled (by sending low-level intervention signals) directly from the central system.

The core component of the solution is a real-time, high frequency updated digital twin model of the environment, which can include both physical objects and virtual elements (i.e., objects that do not exist in reality). By injecting the state of these virtual elements into the object list provided by the vehicle's environmental sensing system (if supported by the test vehicle), the test vehicle will respond to them as if they were actual physical objects. The digital twin model is generated on a central computer based on the raw data from time-synchronized optical sensors deployed in the infrastructure and a pre-mapped UHD representation of the test environment. With the continuously updated twin model and the predefined test scenario (which specifies the trajectories each participant should follow), the central system controls the vehicles and platforms involved in the test. The control algorithms (1) run on the central computer, utilizing the current state of the digital twin model, which includes the spatial position, orientation, velocity, and angular velocity of all participants. These algorithms also require knowledge of the dynamic models and parameters of the vehicles/platforms, as well as the predefined reference trajectories (2) assigned to them during the test scenario definition. This data is also available on the central computer. In the event when an unexpected obstacle is present (which is automatically reflected in the digital twin model), the central computer halts the test and resets the test vehicles/platforms to their initial test scenario state. It then recalculates new trajectories for all test vehicles, guiding them back to their starting positions. Since the initial state of the test scenario is known within the digital twin model, the system can reset to this state from any given condition, enabling the test to be repeated an unlimited number of times without human intervention.

The low-level actuator signals (specific to the controlled vehicle/platform) (e.g. steering angles, accelerator pedal, brake pedal position, etc.) that are output from the control algorithms (1) and responsible for controlling the vehicles/platforms participating in the test are transmitted to the corresponding vehicle/platform via a low-latency communication channel (3). Meanwhile the time-dependent changes of the states of the digital twin model are recorded. The recorded states of the digital twin model are necessary for test evaluation. The central control of the vehicle under test is designed to replace the human driver. Therefore, the control signals generated by the central system must be injected at the same level within the vehicle (4) as the signals generated by the driver's actions, such as steering wheel movements and pedal inputs. In this way, automated execution of advanced driver assistance system function tests can be performed, since in this case the driver assistance system overwrites the injected signal in the same way as if it were an actuator signal generated by the driver. The driver can also be replaced by a steering robot. In this case, access to the vehicle system is not required, since the robot physically turns the steering wheel and presses the brake and accelerator pedals.

The technology enables the automated execution of test scenarios that would pose safety challenges using traditional testing methods. For example, it allows the testing of advanced driving assistance functions in situations involving two high-speed, oncoming vehicles by replacing one of them with a virtual vehicle. Beyond this, the digital twin model can also serve as reference data during evaluations. The technology significantly increases the number of tests that can be conducted within a given time frame while drastically reducing the required human resources, as it allows for automated, endlessly repeatable execution. Conducting a higher number of tests enhances the identification of faults and limitations in the tested functions.

Below is a description of the figures:

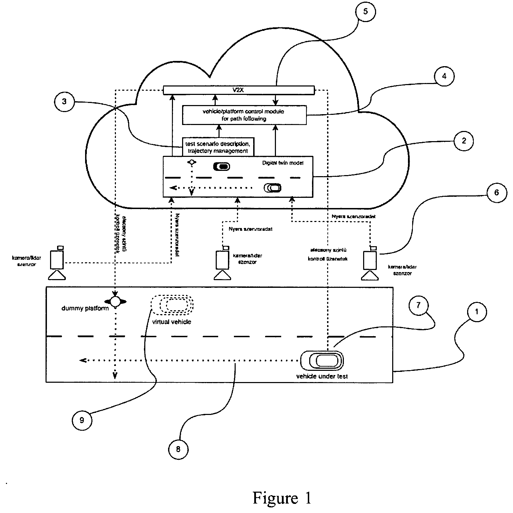

- Figure 1:: Outline of the Architecture for the Automated Testing System of Driver Assistance Functions. The digital twin model (2) (which is based on the raw sensor data (6) recorded real-time from the test environment (1) and an UHD map), and the scenario description and trajectory management components (3) (which build upon the digital twin model) provide the state of the digital twin model of the environment and the reference trajectories to the vehicle/platform control component (4). The control component transmits low-level actuator signals to the vehicles/platforms via a low-latency V2X communication channel (5). Additionally, virtual objects (9) can be injected into the digital twin model. Their current state is transmitted via the V2X connection (5) into the vehicle's supervised object list, ensuring updates at the frequency required by the vehicle's Advanced Driver Assistance System (ADAS).

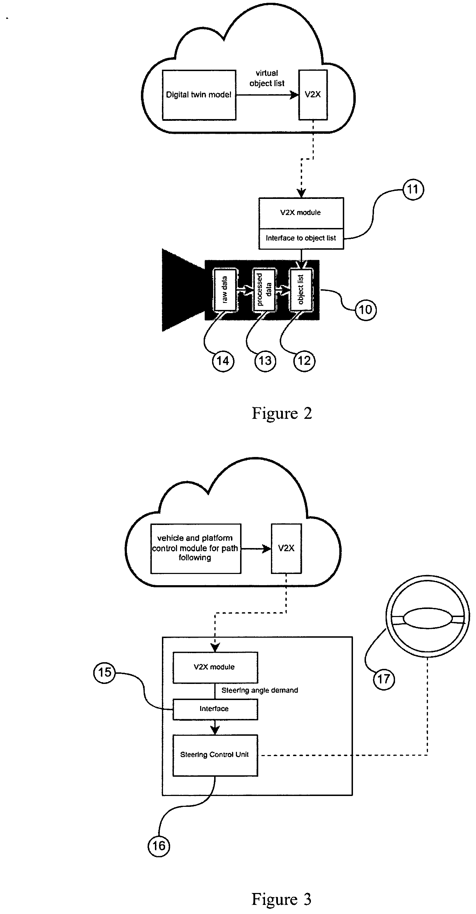

- Figure 2:: Schematic of the mechanism for transferring virtual objects to the object list (12) managed by the ADAS system of the test vehicle via a V2X connection. This is implemented via an interface (11) providing write access to the object list.
- Figure 3:: The mechanism for transmitting low-level control signals to the vehicle utilizes a low-latency V2X connection, which passes through an interface (15) that provides access to the vehicle's "steering control" unit (16).

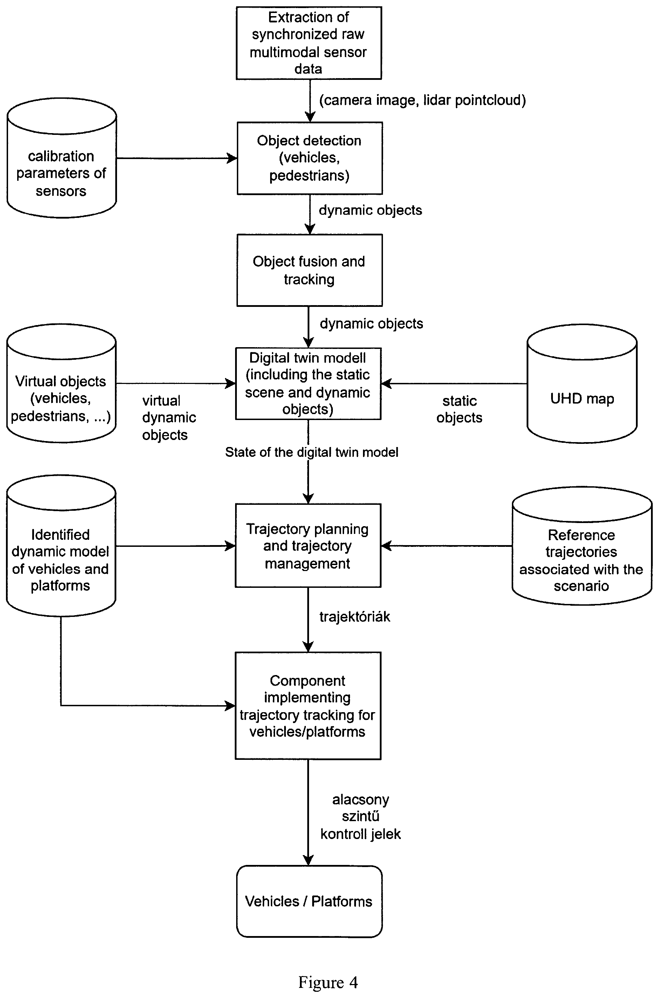

- Figure 4:: Flowchart of the automatic advanced driving assistance function test execution system.

## Claims

1. The system which realises the automatic execution of advanced driving assistance function tests consists of the following components: a real-time updating digital twin model (2) of the test environment (1), sensors (6) deployed in the test environment to provide the necessary data for creating the digital twin model, a test scenario defining component (3), and a control module (4) on the central system that generates control signals. These control signals are then injected into the appropriate subsystems of the vehicles/platforms through dedicated interfaces.

2. A digital twin model is a digital representation of the environment, **characterized by** the fact that it includes a UHD map describing static elements and the real-time updated spatial position and orientation of dynamic elements, as well as virtual objects (9).

3. Virtual objects are part of the digital twin model, **characterized by** the fact that the vehicle responds to them in the same way as if they were real objects. To achieve this, the digital twin model component (2) injects the virtual objects into the object list (11) maintained by the vehicle's ADAS camera via the V2X connection (5).

4. The vehicle control component (4) is **characterized by** its ability to extract the state vectors of the controlled vehicles/platforms from the digital twin model (1) and the reference trajectories from the test scenario description component (3). Based on this data, it generates low-level control signals, which are then transmitted to the Steering Control Unit via a dedicated interface (16) over the V2X connection (5).

5. The test scene description component (3) contains the trajectories describing the test scene, **characterized in that** it communicates directly with the digital twin model (2) and the vehicle control components (4) and supervises the safe execution of the test scene.
